# EUROPEAN PATENT SPECIFICATION

(11) **EP 3 601 633 B1**
(45) Date of publication and mention of the grant of the patent: **22.02.2023**
(21) Application number: 18716742.4
(22) Date of filing: 20.03.2018
(51) Int. Cl.: C23C 28/00, C23C 4/06, C23C 4/18, C23C 16/02, C23C 16/26, C23C 14/02, C23C 14/06

(54) **FULLY DENSE, FLUID TIGHT AND LOW FRICTION COATING SYSTEMS FOR DYNAMICALLY ENGAGING LOAD BEARING SURFACES FOR HIGH PRESSURE HIGH TEMPERATURE APPLICATIONS**
VOLLDICHTE, FLUIDDICHTE UND REIBUNGSARME BESCHICHTUNGSSYSTEME FÜR DYNAMISCH MIT LAST BEAUFSCHLAGTE OBERFLÄCHEN FÜR HOCHDRUCK- UND HOCHTEMPERATURANWENDUNGEN
SYSTÈMES DE REVÊTEMENT ENTIÈREMENT DENSES, ÉTANCHES AUX FLUIDES ET À FAIBLE FROTTEMENT DESTINÉS À VENIR EN PRISE DYNAMIQUEMENT AVEC DES SURFACES SOUMISES À UNE CHARGE POUR DES APPLICATIONS À HAUTE PRESSION ET HAUTE TEMPÉRATURE

(30) Priority: 21.03.2017 US 201715465017
(43) Date of publication of application: 05.02.2020
(73) Proprietor: Praxair S.T. Technology, Inc., North Haven, CT 06473 (US)
(72) Inventor: KLEYMAN, Ardy, S., Carmel, IN 46032 (US); WANG, Daming, Carmel, IN 46033 (US); HUGHES, Kasey, Crawfordsville, IN 47933 (US)
(74) Representative: Novagraaf Group
(86) International application number: PCT/US2018/023262
(87) International publication number: WO 2018/175381

(56) References cited:
- WO-A1-2008/076855
- WO-A1-2015/187658
- WO-A1-2015/187658
- Anonymous: "Tungsten Carbide - Nickel Chromium Self-Fluxing Powders", Material Product Data Sheet DSMTS-0077.4 - Nickel-Based Self-Fluxing Alloys with Hard Phase, 2016, pages 1-5, XP055487183, Oerlikon Metco [CH] Retrieved from the Internet: URL:https://www.oerlikon.com/ecomaXL/files /metco/oerlikon_DSMTS-0077.4_Self-Fluxing_ with_Hardphase.pdf%26download%3D1+&cd=1&hl =de&ct=clnk&gl=de [retrieved on 2018-06-22]
- BOLELLI G ET AL: "HVOF-sprayed WC-Co as hard interlayer for DLC films", SURFACE AND COATINGS TECHNOLOGY, vol. 203, no. 5-7, 13 August 2008 (2008-08-13), pages 699-703, XP025656902, ELSEVIER BV, AMSTERDAM [NL] ISSN: 0257-8972, DOI: 10.1016/J.SURFCOAT.2008.08.014 [retrieved on 2008-08-13]
- Anonymous: "Tungsten Carbide ? Nickel Chromium Self-Fluxing Powders", Material Product Data Sheet DSMTS-0077.4 - Nickel-Based Self-Fluxing Alloys with Hard Phase, 1 January 2016 (2016-01-01), pages 1-5, XP055487183, Retrieved from the Internet: URL:https://www.oerlikon.com/ecomaXL/files /metco/oerlikon_DSMTS-0077.4_Self-Fluxing_ with_Hardphase.pdf%26download%3D1+&cd=1&hl =de&ct=clnk&gl=de [retrieved on 2018-06-22]

## Description

### Field of the Invention

The present invention generally relates to fully dense, low friction, and fluid tight coatings for a variety of applications. Particularly, the coating systems offer low friction and enhanced fluid impermeability for engaging sealing surfaces at elevated temperatures and pressures not previously attainable.

### Background of the Invention

Gate valves are typically used when a straight-line flow of fluid and minimum flow restriction are required. Gate valves are an integral part of wellhead assemblies and piping systems utilized in various supply and pump lines, including oil and gas exploration and production where pressures may range from 34.5 to 206.8 MPa (5,000 to 30,000 psi) or greater. Gate valves consist of a valve body located axially in piping through which fluid flows. Within the valve body is a gate, which is typically a solid metallic component with an aperture extending through the component. In operation, the gate typically slides between two seats, which are circular annulus components having an inside diameter approximately equal to the diameter of the aperture in the gate. The seats are coaxially aligned with and directly or indirectly attached to the ends of the pipe or tubing and in a fixed position thereto, within which the valve is located. When the aperture in the gate is aligned with the holes in the seats, the gate valve is fully open, and the fluid flows freely through the valve. When the aperture in the gate is partially or completely misaligned with seats, the gate valve is partially or fully closed, and the fluid flow is impeded or interrupted. When the valve is partially or fully closed, fluid pressure on the upstream side of the valve also presses the gate against the seat on the downstream side.

An actuator is typically utilized to enable sliding of the gate between the seats. The actuation can be manual, hydraulic or pneumatic. The actuation must be able to generate a sufficient amount of force to overcome static and dynamic frictional forces between the seats and the gate. The gate and seat components have a tendency to stick, adhere or cold weld to each other, thereby resulting in high frictional forces. Additionally, the frictional forces can become even larger at higher fluid operating pressures for oil and gas supply and pump lines.

Wear and corrosion is also a problem for oil and gas applications. As a result, the gate valve must be made of corrosion resistant materials, particularly the seats and gate where corrosion of the surfaces exacerbates wear and frictional problems.

As a result of the tendency for such gate valves to be exposed to harsh conditions which can degrade its structural integrity, various fully-dense coatings have been employed. For example, lubricating coatings have been utilized on the sealing faces of the gates and/or seats. Polymeric materials such as thermoplastics have been applied onto at least one of the surfaces to reduce friction and impart lubricity. However, such coatings have proven unacceptable, as frictional problems may develop over time and eventually increase to an enhanced level that can result in sticking or uneven movement of the valve gate during operation. The loss of lubrication can lead to unacceptable valve torques which may lead to local deformation and/or galling of mating surfaces.

In WO 2015/187658 A1 there is disclosed a protective coating system which includes a carbide-based thermal spray composition, a diamond-like carbon (DLC) low friction layer; and a sealant impregnated into the low friction layer.

Wear resistant coatings such as WCCrCo are another type of fully-dense coating routinely utilized. Near full density is typically achieved by coating impregnation with a polymeric sealer. While the wear resistant coatings have proven successful at lower operating pressure regimes of 103.4 MPa (15,000 psi) or less, and temperatures 176.7 °C (350 F) or less they are typically inadequate as the oil supply and pump lines approach higher pressures and temperatures. Under high contact stresses and temperatures, the coatings can potentially exhibit galling and gas leakage through the coating and between engaging sliding surfaces. Additionally, in order to overcome high friction forces between engaging parts, large size actuators are typically required.

Failure to utilize a coating having adequate fluid impermeability, in combination with adequate wear resistance and lubrication of the gate and seats components can, among other problems, lead to unacceptable galling and potential localized deformation, thereby causing leakage of fluid through the coating and eventually through the valve. Similar problems can arise when insufficient fluid impermeability, wear resistance and lubrication are created along one or more sealing surfaces of a ball valve.

In view of the drawbacks of conventional coatings, there is an unmet need for an improved fully-dense coating system that offers superior performance over conventional coating materials for gate and seat components, including improved wear resistance, lubricity and sealing properties over a wide range of operating pressures and temperatures.

### Summary of the Invention

The invention is defined in independent claims 1 and 10.

In a first aspect, the present invention is a fully-dense, fluid tight, low friction coating system, comprising: a substrate; a thermal spray-fused underlying layer on the substrate, said thermal spray-fused underlying layer produced from a blend comprising a tungsten carbide-based material and a self-fluxing alloy (SFA), wherein said tungsten carbide-based material is in an amount no greater than 70 wt.% based of a total weight of the underlying layer, with the balance SFA, said fully dense, fluid tight low friction coating system characterized by an absence of a polymeric or non-polymeric sealant, and further wherein said fully-dense coating system is characterized by a substantial absence of a visually detectable interconnected porosity; and a low friction layer comprising a diamond-like carbon (DLC) material extending above said thermal spray-fused underlying layer.

In a second aspect, a surface treated apparatus comprising: a gate or ball valve including two seats and a gate or ball; said gate or ball having an contact surface that engages with a corresponding face of said seats; wherein at least one of said engaging face of said gate or ball and said seat is coated with a fully dense gas tight low friction coating system comprising (i) a thermal sprayed and fused coating deposited from a composition of blended tungsten carbide-based and self-fluxing alloy (SFA) powders wherein the tungsten carbide-based powder is in an amount no greater than 70 wt% based on a total weight of the coating, with the balance SFA; (ii) and a diamond-like carbon (DLC) layer extending onto an outer portion of said coating, wherein said coating is characterized by an absence of a polymeric or non-polymeric sealant, and further wherein said fully-dense coating is characterized by a substantial absence of a visually detectable interconnected porosity.

Other aspects, features and embodiments of the disclosure will be more fully apparent from the ensuing description and appended claims.

### Brief Description of the Drawings

The objectives and advantages of the invention will be better understood from the following detailed description of the preferred embodiments thereof in connection with the accompanying figures wherein like numbers denote same features throughout and wherein:
Figure 1 shows a cross-sectional view of a gate valve with the gate disengaged from the seat to allow fluid flow through the passageway;
Figure 2 shows a test set-up of a twist compression test employed to replicate frictional behavior incurred by opening and closing of gate valves; and
Figure 3 shows a test set-up employed to replicate high pressure leakage which may be encountered by gate valves utilized in oil and gas applications;
Figure 4 shows a micrograph of the fully dense, fluid tight underlying coating layer that has been fused with applied DLC layer
Figure 5 shows results of a leak test for a carbide-based thermal spray composition + DLC, as described in Comparative Example 1;
Figure 6 shows results of a leak test for tungsten carbide + SFA sprayed fused coating + DLC, as described in Example 1; and
Figure 7 shows a graphical comparison of twist test compression behavior of a conventional coating and an inventive coating.

### Detailed Description of the Invention

Unless indicated otherwise, all compositions herein are in weight percent, not including unavoidable trace contaminants.

It should be understood that the term "layer" as used herein and throughout the specification is intended to refer to one or more layers which can be discrete or continuous.

The term "fluid" as used herein and throughout the specification is intended to refer to a liquid, slurry, gas or vapor, or any combination thereof.

As used herein, and throughout, the term "fully dense" is characterized by exhibiting fluid tightness whereby no discernable fluid leakage is detected upon high pressure and high temperature leak testing, not previously attainable with conventional coatings that require a sealant.

The present invention relates to novel fully-dense, fluid tight and low friction coatings which are defined at least in part by their substantial fluid impermeability for a variety of applications requiring high temperature and pressure service conditions. The fluid tightness is achieved and maintained at higher temperatures and higher pressures than possible with such conventional coatings. Further, the fluid tightness of the inventive coating is possible without compromising lubricity of the one or more sealed surfaces onto which the coating of the present invention is applied.

The use of spray and fused tungsten carbide based coatings for high pressure, high temperature oil and gas applications were not previously recognized or utilized due to high friction forces generated at high pressures by such group of alloys. For example, the present invention has the ability to create a fully dense, fluid tight coating in the absence of a sealant, which is a significant departure from conventional sealed coatings, including Applicants' prior patent application, 13633-US (US Patent Pub. No. 2015-0353856). Prior coatings consistent with US Patent Pub. No. 2015-0353856 required a polymeric or non-polymeric sealant applied after DLC whereby the sealant was required to penetrate into the pores of the tungsten carbide based thermal sprayed layer. The sealant created a fluid-tight fully-dense coating system. However, the present invention can create a coating system with higher fluid tightness while maintaining or improving lubricity of the sealing surface, through use of a low friction DLC layer, without the addition of a separate sealant. Further, the fluid tightness of the present invention can withstand higher pressure and temperature service conditions than previously possible. Accordingly, the present invention offers not only greater fluid tightness, but does so (i) in the absence of a sealant, and (ii) at higher temperatures and pressures than previously possible with sealant-containing coatings. As such, Applicants have discovered a relatively simpler coating system with significantly improved performance.

The coatings are particularly suitable for maintaining structural integrity of load bearing surfaces, such as, but not intending to be limiting, the gate and seat surfaces of a gate valve or ball valve. The coatings offer improved and sustained wear resistance, corrosion protection and the ability to create and maintain lubricity and a substantially impermeable seal through the coating along one or more load bearing surfaces which, during operation, can engage with other sealing surfaces at elevated service pressures, such as for example, 68.9 MPa to 206.8 MPa (10,000 psi to 30,000 psi), and more preferably 137.9 MPa to 206.8 MPa (20,000 psi to 30,000 psi) and/or temperatures exceeding 176.7 °C (350 F). In this regard, the present invention represents a significant improvement over conventional coatings and coating systems for sealing surfaces of various components, including gate and seat components and ball valves, all of which are susceptible to fluid leakage during service at high temperature and high pressure conditions. By way of example, as today's oil and gas applications continue to require increasingly higher operating pressures and temperatures during service life of various components, conventional coatings and coatings systems are unable to create and maintain the necessary sealing properties and lubricity on the engaging surfaces of such components that can become subject to ever increasing loads for prolonged periods of time during its service life.

In one embodiment of the present invention, a fully-dense, fluid tight coating system is provided that includes a tungsten carbide(WC)-based material with a self-fluxing alloy (SFA); and a low friction layer comprising a diamond-like carbon layer (DLC) material that is overlying the WC-based material with SFA. The tungsten carbide-based material can be blended with the SFA, both of which are preferably in powder form, and thermally spray-fused (i.e., "spray-fused") to create the fully-dense coating structure having fluid tight properties, while still maintaining or improving lubricity of the one or more sealing surfaces onto which the inventive coating is applied by use of a low friction layer incorporated into the fully dense coating system. The fully-dense coating is characterized by the absence of a polymeric or non-polymeric sealant. Additionally, the fully-dense coating is characterized by an absence of visually detectable interconnected porosity. Such attributes of the present invention not only improve the fluid tightness relative to conventional coatings at a given service temperature and pressure, but also maintain such improved performance at elevated service temperatures and pressures not previously attainable with conventional coatings that include a sealant.

Each of the constituents of the tungsten carbide-based material, SFA and DLC is chemically and physically compatible with each other, thereby eliminating deleterious degradation reactions which could potentially affect the structural integrity of the resultant coating system. Further, the blended combination of SFA with WC-based material is a fused structure that is metallurgically bonded to the substrate (e.g., sealing surface) without adversely affecting the structural integrity thereof.

The fully dense coating can achieve superior resistance to fluid leakage (i.e., substantial fluid impermeability) so as to create fluid-tightness through one or more sealing surfaces onto which the fully-dense coating is applied. Previous coating systems have exhibited a tendency to degrade at temperatures of 176.7 °C (350 °F) or higher, thereby causing potentially significant fluid leakage (e.g., leakage of process fluid through a sealing surface of a gate valve or ball valve). However, the present invention can withstand fluid leakage at 137.9 MPa (20,000 psi) or higher and temperatures up to 315.6 °C (600 °F).

The WC-based material extends over a sealing surface of a substrate. The carbide-based material is characterized as a hardened layer that provides wear resistance and corrosion resistance. In a preferred embodiment, the carbide-based composition is derived from a powder blend of a tungsten carbide-cobalt material in a metallic cobalt alloy (i.e., carbide-cobalt), whereby the tungsten carbide-cobalt material has a formulation that comprises tungsten carbide, 5% to 20% cobalt,; and more preferably about 10% to 14% cobalt.

In addition to the tungsten carbide-based material, the present invention requires a self-fluxing alloy (SFA) to form the fully dense coating structure. SFA's are generally characterized as a group of metallic alloys which are silicon-boron containing. The selection of SFA's as used herein may include alloy compositions that comprise Ni, Co, Cr, C, Si, B, Fe and/or W. Such materials can be applied by thermally sprayed processes, such as oxygen-fuel combustion, high velocity oxygen fuel (HVOF) or plasma spray devices. After the deposition onto a metallic substrate, the SFA's are fused using a heat source including but not limiting to an oxygen-fuel heating torch or a furnace. The coatings are generally fused between 950 to 1175 °C (1740 to 2150 °F), with the exact temperature depending upon the composition. The final coating is metallurgically bonded to the substrate and is impermeable to the fluids as a result of its nearly 0% porosity (i.e., a substantial absence of a visually detectable interconnected porosity).

Any suitable particle size for SFA and the WC-based material can be employed. Preferably the SFA is sized to less than 145 micrometers but greater than 15 micrometers and the WC-based material is sized to less than 53 micrometers), but greater than 10 micrometers.

The SFA's are thermally sprayed and fused with the WC-based material so as to create a substantially pore free and hard coatings (e.g., a Vickers microhardness of about 800 to 1200 DPH). The fully dense coating structure is substantially free of interconnected porosity such that no fluid can penetrate through the inventive coating structure towards the sealing surface. The fusion process involves applying heat to a thermally sprayed coating deposited from a powder blend of the SFA and tungsten carbide-based material. The coated article is heated until the coating is melted into a liquid phase while the substrate still remains in a solid state. A portion of the elements of the liquid phase interdiffuse into the substrate, and elements of the substrate interdiffuse into the liquid phase. The liquid phase is coalesced and then is cooled to undergo solidification. Upon solidification, a fused coating derived from the powder blend of SFA and tungsten carbide-based material is formed. The fused coating is free of any interconnected pores. Upon solidification, the fused coating is metallurgically bonded to the substrate.

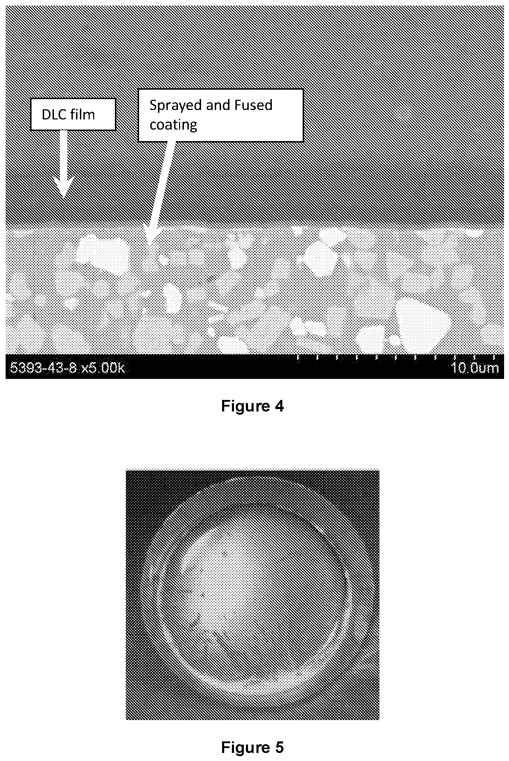

An exemplary fused coating derived from the powder blend of SFA and tungsten carbide-based material as a fully dense underlying layer is shown in Figure 4. The micrograph is produced from a scanning electron microscope (SEM) at a magnification of 5000X. The micrograph shows labeled phases DLC layer and a Sprayed and Fused coating.

The weight ratio of the tungsten-carbide based material to SFA is preferably in a controlled range to ensure that the fully dense coating structure can be created. The weight ratio of the tungsten-carbide to the SFA is not greater than 7:3, and more preferably not greater than 3:2 (i.e., 60 wt% tungsten carbide and 40 wt% SFA). However, tungsten carbide in an amount greater than about 7:3 is avoided to prevent defects, such as cracks in the coating or lack of fusion. Defects can lead to voids, thereby preventing the fully dense coating from being pore-free such that the coating when applied onto a sealing surface may be prone to fluid leakage at certain pressure and temperatures encountered during service life of the sealing surface.

The underlying fully dense coating layer at the prescribed weight ratios of SFA and WC-based material has sufficient hardness to support an overlying low frictional layer comprising DLC. Otherwise, the lack of a sufficient hardness of the underlying fully dense coating layer can cause the DLC layer to crack. The DLC is applied to improve lubricity of the fully dense underlying coating layer. The DLC and underlying fully dense coating layer are physically and chemically compatible. The DLC is applied onto an outer portion or free surface of the underlying fully dense coating layer to thereby create a DLC coating region overlying the underlying fully dense coating layer.

The DLC has a predetermined thickness, which can range from 1 to 10 microns, preferably from about 1 to 8 microns, and more preferably from about 1 to 5 microns. Incorporation of the DLC substantially lowers the friction of the underlying fully dense layer in contact with its mating surface of the coating system, but without deleteriously impacting wear resistance and corrosion resistance properties of the underlying fully dense layer; and without adversely introducing visually detectable pores into the fully dense layer. The result is a reduction in friction between the sealing surfaces, such as those of a gate and seat while still maintaining the fully dense, fluid tight coating structure of the resultant coating system. Representative examples of DLC materials include, but are not limited to, hydrogenated amorphous carbon (designated as "a-C:H") and hydrogenated tetrahedral amorphous carbon (designated as "ta-C:H"). DLC coatings may be deposited by any suitable technique, and advantageously at temperatures not exceeding 204.4 °C (400 F) so as to not affect substrate and coating material properties.

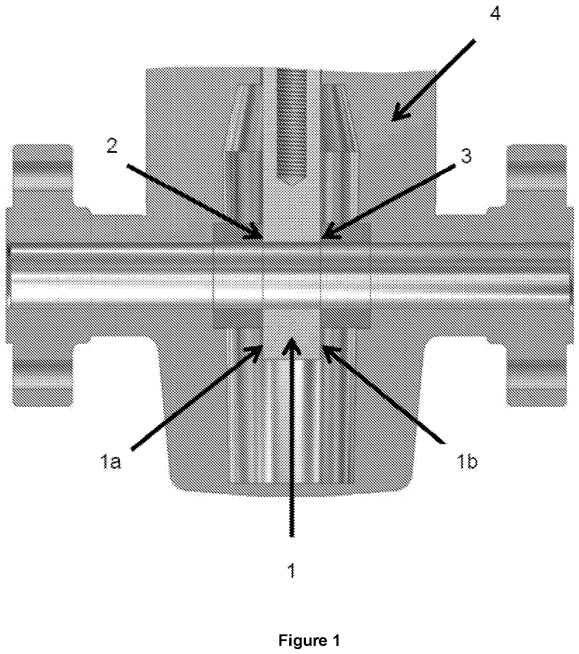

The present invention has discovered that a low friction material comprising DLC, in combination with the underlying fully dense composition in the absence of a sealant is able to create and maintain a fluid-tight (i.e., substantially impermeable) seal of a sealed surface, such as gate valve (as shown by the representative example in Figure 1) during its service life. The inability to form a fluid-tight seal can be more problematic in certain applications when service or operating pressures increase, by way of example, beyond 68.9 MPa (10,000 psi) to elevated levels approaching 206.8 MPa (30,000 psi) or greater in combination with elevated temperatures up to 315.6 °C (600 F). Additionally, corrosive fluids and sustained service life (e.g., repeated cycles of opening and closing of a gate valve) exacerbates the problem

The present invention has several benefits. For example, valves that are used in the high temperature, high pressure environment such as down hole drilling and offshore drilling can benefit from the superior protective attributes of the fully dense, fluid tight, low friction coating of the present invention. The elevated service temperatures of such drilling application are often times higher than commercially available sealants incorporated into conventional coatings. As such, the sealants will age and degrade, thereby causing leakage of the process fluid through the coating; and the valve will begin to malfunction. Furthermore, the fully dense coating of the present invention surprisingly exhibits better resistance to fluid leakage than coatings with sealants, which tend to have inherent porosity. Still further, the fully dense coating can maintain its structural integrity at temperatures and pressures higher than those of conventional coatings incorporating sealants.

Unlike conventional coatings, the present invention has demonstrated no need for a sealer, yet still achieves fluid tightness without compromising the inventive coating system's lubricity of the one or more sealing surfaces onto which the inventive coating system is applied. Further, the inventive coating can tolerate higher temperatures and pressures than previously possible with conventional coatings that incorporated a sealant. In this regard, the fully-dense coating system of the present invention is not formulated with a specific type of polymeric or non-polymeric sealant. There is no need to impregnate a sealant into the low friction layer and WC-based layer. The working examples that will be discussed below quantify the improved performance of the fully-dense coating system of the present invention in comparison to conventional coatings and coating systems.

The fully-dense coating system of the present invention is suitable for any substrate surface having one or more sealing surfaces. By way of example, and not intending to be limiting, the inventive coating can be applied to aviation components in which the cylinders or their mating surfaces (bushings or bearings) are at least partially coated. Additionally, the coating systems of the present invention are particularly suitable for metallic load bearing surfaces, including, but not limited to, gate and seat components of the gate valves for the oil and gas industry. Referring to Figure 1, the coating system can be applied to the engaging surfaces 2 and 3 of both seats. Alternatively, the coating system can be omitted from the gate 1 or engaging surfaces 2 and 3 of both seats. Unlike conventional materials, the coating systems of the present invention achieves and prevents fluid leakage through the coating, without adversely impacting lubricity, wear resistance and corrosion resistance during the service life of the gate valve 4. In operation, when moving the gate 1 across the faces 2 and 3 of the seats, the fully-dense coating system provides for a reduced coefficient of friction, reduced wear, and galling prevention while creating and maintaining a fluid-tight seal through the coating when the gate valve 4 is moved down into the closed position with seat faces 2 and 3. As the working examples will show, such properties remain even after numerous cycles.

Preferably, the coating system of the present invention is applied onto at least one of the engaging faces of the seats 2 and 3 and the gate faces la and 1b. It should be understood that variations are contemplated. For example, the fully-dense coating system may be applied onto either of the faces 2 and 3 for the seats and gate 1 while the other face is coated with only a carbide-based thermal spray composition that is optionally coated with a low friction layer. Alternatively, the fully-dense coating system of the present invention can be applied to one of the surfaces with the other surface including no fully-dense coating.

As will be shown and discussed below in the Working Examples, several experiments were performed to compare the fully-dense coatings of the present invention with other conventional materials. The criteria for a successful fully-dense coating system were dependent upon its ability to achieve and create a fluid tight impermeable seal while maintaining a low coefficient of friction.

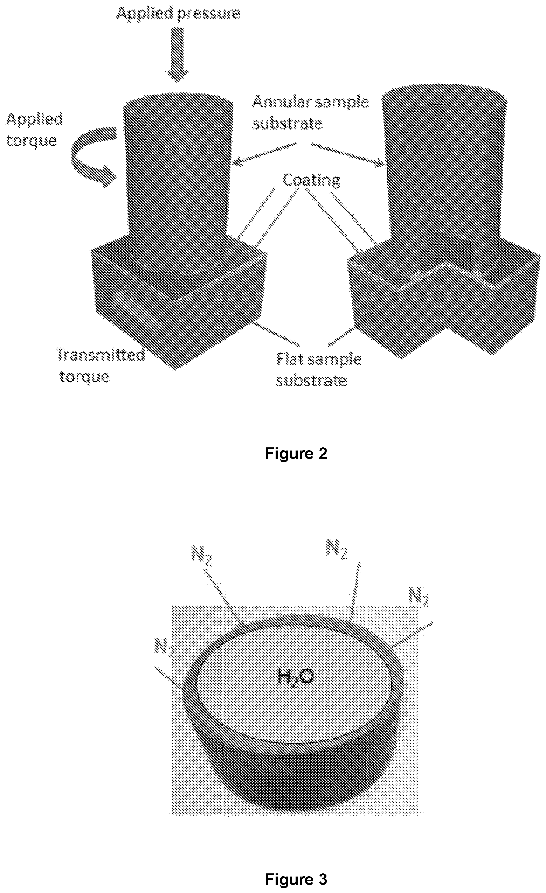

The experiments simulated high pressure conditions typically encountered by gate valves utilized in oil and gas applications. A twist compression test was used to replicate frictional behavior incurred by opening and closing of gate valves. The friction behavior of different coating systems was investigated using a twist compression test at 206.8 MPa (30,000 psi) contact pressure with grease lubrication. The schematic of the test-up is shown in Figure 2. The coating to be tested was applied between the annular sample substrate and the flat sample substrate as shown in Figure 2. The test was performed with an annular cylinder which was driven by a hydraulic motor brought into contact with a flat sample. When the desired pressure had been generated, the annular sample was rotated. Torque transmission between a rotating annular cylinder and a flat sample was measured. Data was collected electronically and the coefficient of friction was calculated from the ratio of transmitted torque to applied pressure.

A second test set-up as shown in Figure 3 was used to replicate high pressure leakage, which may be encountered by gate valves utilized in oil and gas applications. High pressure leak testing was used to investigate the gas leakage through the coating. The test consisted of subjecting a portion of a coated sample to nitrogen at a pressure of 68.9 MPa (10,000 psi) for a minimum of 10 min as shown by the arrows in Figure 3 while another portion of the coated sample was submitted to atmospheric pressure and covered with a thin layer of leak detection fluid. If the coating was permeable to the nitrogen gas, bubbles were observed on the coating surface during the test.

### COMPARATIVE EXAMPLE 1 (leak test for carbide-based thermal spray composition + DLC - fig 5)

A coating was applied by a thermal spray process to the test sample having a diameter of approximately 7.1 cm (2.8 inches and a thickness of approximately 3.8 cm (1.5 inches). Then, the coating was ground and lapped. Next, a low friction layer of DLC was applied to the sample by a Plasma activated chemical vapor deposition (Pa CVD) process. No sealant was impregnated into the coating system.

A high pressure leak test was conducted to the resultant coating. A significant amount of bubbles was observed along the periphery of the tested sample as shown in Figure 5 at an applied pressure of less than 6.9 MPa (1,000 psi). The large amount of bubbles was an indication of the inability of the coating with DLC to prevent leakage at low pressures.

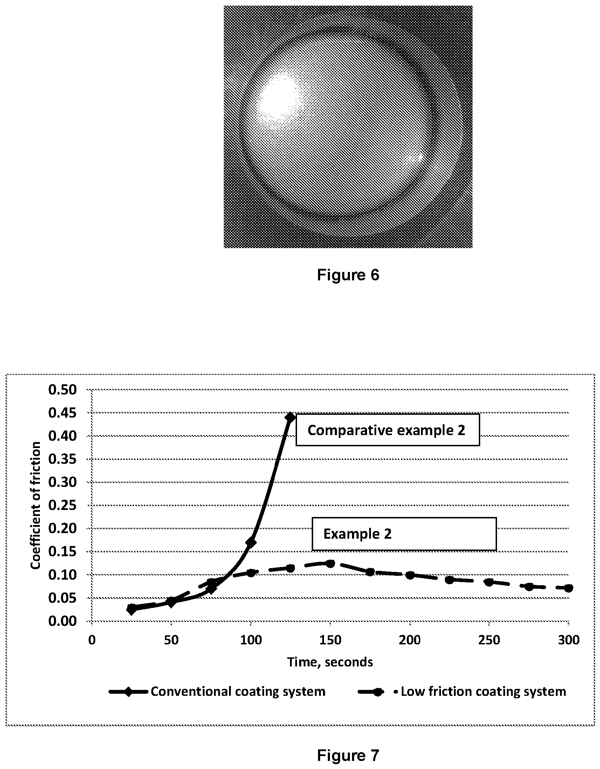

### Example 1 (leak test for tungsten carbide + SFA sprayed fused coating + DLC - fig 6)

A powder blend of a tungsten carbide-cobalt material and a SFA was employed to produce a coating using a HVOF coating process. The coating was applied to the test sample having a diameter of approximately 7.1 cm (2.8 inches) and a thickness of approximately 3.8 cm (1.5 inches). The coating was then fused, ground and lapped. A low friction layer of DLC was applied onto the underlying coating. The DLC was applied by PaCVD.

A high pressure leak test was conducted on the coated test sample. No bubbles were observed on the surface of the coated test sample at an applied pressure of 68.9 MPa (10,000 psi) after 10 minutes of testing, as shown in Figure 6. The lack of bubbles at high pressure was an indication of the ability of the spray fused coating with DLC to prevent leakage.

### COMPARATIVE EXAMPLE 2 (friction test for tungsten carbide-based thermal spray coatings at 206.8 MPa (30,000 psi) - Fig. 7 solid line)

The frictional behavior of a thermal spray coating system was evaluated using the twist compression test at about 206.8 MPa (30,000 psi contact pressure with grease. The coatings to be tested represented conventional gate valve thermal sprayed WC based coatings. The coatings were applied to both the annular sample substrate and the flat sample substrate. When a pressure of 206.8 MPa (30,000 psi) was generated, the annular sample was rotated. Torque transmission between a rotating annular cylinder and a flat sample was measured, and the coefficient of friction was calculated from the ratio of transmitted torque to applied pressure.

Figure 7 shows the results in a graphical format. The coefficient of friction between the annular substrate and flat sample substrate exponentially increased without stabilizing during the test.

### EXAMPLE 2 (friction test for tungsten carbide + SFA spray and fused coating + DLC at 206.8 MPa (30,000 psi) - Fig. 7 dash line)

The frictional behavior of the thermal spray coating system of Example 2 with the addition of a DLC onto the HVOF coated annular sample was evaluated using the twist compression test at 206.8 MPa (30,000 psi) contact pressure with grease. The DLC was applied onto the surface of annular sample by PaCVD, while the same coating was applied to the flat sample but without DLC. When a pressure of 206.8 MPa (30,000 psi) was generated, the annular sample was rotated. Torque transmission between a rotating annular cylinder and a flat sample was measured, and the coefficient of friction was calculated from the ratio of transmitted torque to applied pressure.

Figure 7 shows the results in a graphical format. The coating coefficient of friction gradually increased to a value of 0.12 and then was maintained below 0.1. The results indicated that the DLC served as a low friction layer that reduced the overall coefficient of friction of the coating system.

While it has been shown and described what is considered to be certain embodiments of the invention, it will, of course, be understood that various modifications and changes in form or detail can readily be made without departing from the scope of the invention as defined by the claims.

## Claims

1. A fully-dense, fluid tight, low friction coating system comprising:
a substrate;
a thermal spray-fused underlying layer on the substrate, said thermal spray-fused underlying layer produced from a blend comprising a tungsten carbide-based material and a self-fluxing alloy (SFA), wherein said tungsten carbide-based material is in an amount no greater than 70 wt% based on a total weight of the underlying layer, with the balance SFA, said fully dense, fluid tight low friction coating system **characterized by** an absence of a polymeric or non-polymeric sealant, and further wherein said fully-dense coating system is **characterized by** a substantial absence of a visually detectable interconnected porosity; and
a low friction layer extending above said thermal spray-fused underlying layer, wherein said low friction layer comprises a diamond-like carbon (DLC) layer.

2. The fully-dense, fluid tight, low friction coating system of claim 1, wherein said tungsten carbide-based material comprises WC in a metallic alloy matrix.

3. The fully-dense, fluid tight, low friction coating system of claim 2, wherein said SFA is in a range of 30 to 90 wt.% based on the total weight of the thermal spray-fused underlying layer and said WC is in a range of 10 to 70 wt% based on the total weight of the thermal spray-fused underlying layer.

4. The fully-dense, fluid tight, low friction coating system of claim 1 derived from a powder blend of said SFA and said WC-based material that is thermally sprayed onto the substrate.

5. The fully dense, fluid tight, low friction coating system of claim 1, wherein said substrate comprises one or more sealing surfaces of a gate/ball component or a seat component of a gate/ball valve.

6. The fully dense, fluid tight, low friction coating system of claim 1, wherein said tungsten carbide-based material is derived from a powder that is blended with the SFA material.

7. The fully dense, fluid tight, low friction coating system of claim 1, wherein said tungsten carbide-based material is selected from the group consisting of WC-CoCr, WC-Co, WC-Ni.

8. The fully dense, fluid tight, low friction coating system of claim 1, wherein said DLC has a thickness of 1 to 5 µm (1 micron equals to 1 µm)

9. The fully dense, fluid tight, low friction coating system of claim 1, wherein said SFA is selected from the of alloys comprising Ni, Co, Cr, C, Si, B, Fe and W.

10. A surface treated apparatus comprising:
a gate or ball valve including two seats and a gate or ball; said gate or ball having a contact surface that engages with a corresponding face of said seats; wherein at least one of said engaging face of said gate or ball and seat is coated with a fully dense gas tight low friction coating system comprising (i) a thermal sprayed and fused coating deposited from a composition of blended tungsten carbide-based and self-fluxing alloy (SFA) powders wherein the tungsten carbide-based powder is in an amount no greater than 70 wt% based on a total weight of the coating, with the balance SFA; (ii) and a diamond-like carbon (DLC) layer extending onto an outer portion of said coating
wherein said coating is **characterized by** an absence of a polymeric or non-polymeric sealant, and further wherein said fully-dense coating is **characterized by** a substantial absence of a visually detectable interconnected porosity.

11. The surface treated apparatus of claim 10, wherein said fully dense coating system is **characterized by** a coefficient of friction below 0.1 at contact pressures at least at 137.9 MPa (20,000 psi) and substantial fluid impermeability at an elevated temperate up to 315.6 °C (600 °F).

12. The surface treated apparatus of claim 10, wherein each of said engaging surfaces of said gate or ball and said seats is coated with said fully dense coating system.

13. The surface treated apparatus of claim 10, wherein said tungsten carbide is distributed in a metallic alloy matrix and further wherein said SFA is in a range of 30 to 90 wt% based on the total weight of the underlying layer and said WC is in a range of 10 to 70 wt% based on the total weight of the underlying layer.

## Patentansprüche

1. Völlig dichtes, fluidundurchlässiges, reibungsarmes Beschichtungssystem, umfassend:
ein Substrat;
eine wärmesprühverschmolzene Unterschicht auf dem Substrat, wobei die wärmesprühverschmolzene Unterschicht aus einer Mischung hergestellt ist, umfassend ein Material auf Wolframcarbid-Basis und eine selbstschmelzige Legierung (SFA), wobei das Material auf Wolframcarbid-Basis in einer Menge nicht größer als 70 Gew.-%, basierend auf einem Gesamtgewicht der Unterschicht mit der Rest-SFA vorliegt, wobei das völlig dichte, fluidundurchlässige, reibungsarme Beschichtungssystem **gekennzeichnet ist durch:** eine Abwesenheit eines polymeren oder nicht polymeren Dichtmittels, und ferner wobei das völlig dichte Beschichtungssystem **gekennzeichnet ist durch:** eine wesentliche Abwesenheit einer visuell nachweisbaren zusammenhängenden Porosität; und
eine reibungsarme Schicht, die sich über der wärmesprühverschmolzenen Unterschicht erstreckt, wobei die reibungsarme Schicht eine diamantähnliche Kohlenstoffschicht (DLC-Schicht) umfasst.

2. Völlig dichtes, fluidundurchlässiges, reibungsarmes Beschichtungssystem nach Anspruch 1, wobei das Material auf Wolframcarbid-Basis WC in einer metallischen Legierungsmatrix umfasst.

3. Völlig dichtes, fluidundurchlässiges, reibungsarmes Beschichtungssystem nach Anspruch 2, wobei die SFA in einem Bereich von 30 bis 90 Gew.-%, basierend auf dem Gesamtgewicht der wärmesprühverschmolzenen Unterschicht, liegt und das WC in einem Bereich von 10 bis 70 Gew.-%, basierend auf dem Gesamtgewicht der wärmesprühverschmolzenen Unterschicht, liegt.

4. Völlig dichtes, fluidundurchlässiges, reibungsarmes Beschichtungssystem nach Anspruch 1, das aus einer Pulvermischung der SFA und dem WC-basierten Material stammt, die auf das Substrat wämegesprüht wird.

5. Völlig dichtes, fluidundurchlässiges, reibungsarmes Beschichtungssystem nach Anspruch 1, wobei das Substrat eine oder mehrere Dichtungsoberflächen einer Absperr-/Kugelkomponente oder einer Sitzkomponente eines Absperr-/Kugelventils umfasst.

6. Völlig dichtes, fluidundurchlässiges, reibungsarmes Beschichtungssystem nach Anspruch 1, wobei das Material auf Wolframcarbid-Basis von einem Pulver stammt, das mit dem SFA-Material gemischt ist.

7. Völlig dichtes, fluidundurchlässiges, reibungsarmes Beschichtungssystem nach Anspruch 1, wobei das Material auf Wolframcarbid-Basis aus der Gruppe ausgewählt ist, bestehend aus WC-CoCr, WC-Co, WC-Ni.

8. Völlig dichtes, fluidundurchlässiges Beschichtungssystem nach Anspruch 1, wobei das DLC eine Dicke von 1 bis 5 µm (1 Mikrometer gleich 1 µm) aufweist.

9. Völlig dichtes, fluidundurchlässiges, reibungsarmes Beschichtungssystem nach Anspruch 1, wobei die SFA aus von den Legierungen ausgewählt ist, umfassend Ni, Co, Cr, C, Si, B, Fe und W.

10. Oberflächenbehandelte Einrichtung, umfassend:
ein Absperr- oder Kugelventil, einschließlich zweier Sitze und einer Absperrung oder einer Kugel; wobei die Absperrung oder die Kugel eine Kontaktoberfläche aufweist, die mit einer entsprechenden Fläche der Sitze in Eingriff steht, wobei mindestens eine der Eingriffsflächen der Absperrung oder der Kugel und des Sitzes mit einem völlig dichten gasundurchlässigen, reibungsarmen Beschichtungssystem beschichtet ist, umfassend (i) eine wärmegesprühte und verschmolzene Beschichtung, die aus einer Zusammensetzung von gemischten Pulvern auf Wolframcarbid-Basis und aus selbstschmelziger Legierung (SFA) abgeschieden wird, wobei das Pulver auf Wolframcarbid-Basis in einer Menge nicht größer als 70 Gew.-% basierend auf einem Gesamtgewicht der Beschichtung mit der Rest SFA vorliegt; (ii) und eine diamantähnliche Kohlenstoffschicht (DLC-Schicht), die sich auf einen äußeren Abschnitt der Beschichtung erstreckt,
wobei die Beschichtung **gekennzeichnet ist durch:** eine Abwesenheit eines polymeren oder nicht polymeren Dichtmittels, und ferner wobei die völlig dichte Beschichtung **gekennzeichnet ist durch:** eine wesentliche Abwesenheit einer visuell nachweisbaren zusammenhängenden Porosität.

11. Oberflächenbehandelte Einrichtung nach Anspruch 10, wobei das völlig dichte Beschichtungssystem **gekennzeichnet ist durch:** einen Reibungskoeffizienten unter 0,1 bei Kontaktdrücken mindestens bei 137,9 MPa (20.000 psi) und wesentlicher Fluidimpermeabilität bei einer erhöhten Temperatur bis zu 315.6 °C (600 °F).

12. Oberflächenbehandelte Einrichtung nach Anspruch 10, wobei jede der Eingriffsoberflächen der Absperrung oder der Kugel und der Sitze mit dem völlig dichten Beschichtungssystem beschichtet ist.

13. Oberflächenbehandelte Einrichtung nach Anspruch 10, wobei das Wolframcarbid in einer metalli schen Legierungsmatrix verteilt ist und ferner wobei die SFA in einem Bereich von 30 bis 90 Gew.-% basierend auf dem Gesamtgewicht der Unterschicht liegt, und das WC in einem Bereich von 10 bis 70 Gew.-%, basierend auf dem Gesamtgewicht der Unterschicht liegt.

## Revendications

1. Système de revêtement à faible frottement, étanche aux fluides, totalement dense, comprenant :
un substrat ;
une couche sous-jacente fondue par pulvérisation thermique sur le substrat, ladite couche sous-jacente fondue par pulvérisation thermique produite à partir d'un mélange comprenant un matériau à base de carbure de tungstène et un alliage autodécapant (SFA), dans lequel ledit matériau à base de carbure de tungstène est en une quantité n'excédant pas 70 % en poids sur la base d'un poids total de la couche sous-jacente, avec le solde de SFA, ledit système de revêtement à faible frottement, étanche aux fluides totalement dense **caractérisé par** une absence d'un matériau d'étanchéité polymère ou non polymère, et dans lequel en outre ledit système de revêtement totalement dense est **caractérisé par** une absence sensible d'une porosité interconnectée visuellement détectable ; et
une couche à faible frottement s'étendant au-dessus de ladite couche sous-jacente fondue par pulvérisation thermique, dans lequel ladite couche à faible frottement comprend une couche de carbone de type diamant (DLC).

2. Système de revêtement à faible frottement, étanche aux fluides, totalement dense selon la revendication 1, dans lequel ledit matériau à base de carbure de tungstène comprend du WC dans une matrice d'alliage métallique.

3. Système de revêtement à faible frottement, étanche aux fluides, totalement dense selon la revendication 2, dans lequel ledit SFA est dans une plage de 30 à 90 % en poids sur la base du poids total de la couche sous-jacente fondue par pulvérisation thermique et ledit WC est dans une plage de 10 à 70 % en poids sur la base du poids total de la couche sous-jacente fondue par pulvérisation thermique.

4. Système de revêtement à faible frottement, étanche aux fluides, totalement dense selon la revendication 1 dérivé d'un mélange de poudres dudit SFA et du matériau à base de WC qui est pulvérisé thermiquement sur le substrat.

5. Système de revêtement à faible frottement, étanche aux fluides, totalement dense selon la revendication 1, dans lequel ledit substrat comprend une ou plusieurs surfaces d'étanchéité d'un composant de tiroir/bille ou d'un composant de siège d'une vanne à tiroir/bille.

6. Système de revêtement à faible frottement, étanche aux fluides, totalement dense selon la revendication 1, dans lequel ledit matériau à base de carbure de tungstène est dérivé d'une poudre qui est mélangée avec le matériau SFA.

7. Système de revêtement à faible frottement, étanche aux fluides, totalement dense selon la revendication 1, dans lequel ledit matériau à base de carbure de tungstène est choisi dans le groupe constitué de WC-CoCr, WC-Co, WC-Ni.

8. Système de revêtement à faible frottement, étanche aux fluides, totalement dense selon la revendication 1, dans lequel ledit DLC a une épaisseur de 1 à 5 µm (1 micromètre est égal à 1 µm).

9. Système de revêtement à faible frottement, étanche aux fluides, totalement dense selon la revendication 1, dans lequel ledit SFA est choisi parmi le d'alliages comprenant Ni, Co, Cr, C, Si, B, Fe et W.

10. Appareil traité en surface comprenant :
une vanne à tiroir ou à bille incluant deux sièges et un tiroir ou une bille ; ledit tiroir ou ladite bille ayant une surface de contact qui vient en prise avec une face correspondante desdits sièges ; dans lequel au moins un de ladite face de mise en prise dudit tiroir ou de la bille et du siège est revêtu d'un système de revêtement à faible frottement, étanche aux fluides, totalement dense comprenant (i) un revêtement pulvérisé et fondu thermiquement déposé à partir d'une composition de poudres mélangées à base de carbure de tungstène et d'alliage autodécapant (SFA) dans lequel la poudre à base de carbure de tungstène est en une quantité n'excédant pas 70 % en poids sur la base d'un poids total du revêtement, avec le solde de SFA ; (ii) et une couche de carbone de type diamant (DLC) s'étendant sur une partie externe dudit revêtement
dans lequel ledit revêtement est **caractérisé par** une absence d'un matériau d'étanchéité polymère ou non polymère, et dans lequel en outre ledit revêtement totalement dense est **caractérisé par** une absence sensible d'une porosité interconnectée visuellement détectable.

11. Appareil traité en surface selon la revendication 10, dans lequel ledit système de revêtement totalement dense est **caractérisé par** un coefficient de frottement inférieur à 0,1 à des pressions de contact au moins à 137,9 MPa (20 000 psi) et une imperméabilité sensible aux fluides à une température élevée jusqu'à 315,6 °C (600 °F).

12. Appareil traité en surface selon la revendication 10, dans lequel chacune desdites surfaces de mise en prise dudit tiroir ou de ladite bille et desdits sièges est revêtue dudit système de revêtement totalement dense.

13. Appareil traité en surface selon la revendication 10, dans lequel ledit carbure de tungstène est réparti dans une matrice d'alliage métallique et dans lequel en outre ledit SFA est dans une plage de 30 à 90 % en poids sur la base du poids total de la couche sous-jacente et ledit WC est dans une plage de 10 à 70 % en poids sur la base du poids total de la couche sous-jacente.
